# EUROPÄISCHE PATENTANMELDUNG

(11) **EP 2 072 793 A2**
(43) Veröffentlichungstag der Anmeldung: **24.06.2009**
(21) Anmeldenummer: 08169540.5
(22) Anmeldetag: 20.11.2008
(51) Int. Cl.: F02K 1/48, F02K 1/38

(54) **Düse mit Leitelementen**

(30) Priorität: 21.12.2007 DE 102007063018
(71) Anmelder: Rolls-Royce Deutschland Ltd & Co KG, 15827 Blankenfelde-Mahlow (DE)
(72) Erfinder: Rose, Marco, 09599 Freiberg (DE); Spieweg, Rene, 14197 Berlin (DE)
(74) Vertreter: Wablat, Wolfgang

(57) **Zusammenfassung**

Die Erfindung betrifft eine Düse mit am Düsenrand (9) in Umfangsrichtung angeordneten Leitelementen (10).

Um eine Düse (1) zu schaffen, die Schallemissionen verringert und gleichzeitig die Strömungsverluste gering hält, sind am Düsenrand (9) weitere Leitelemente (20) in Umfangsrichtung angeordnet, wobei die einen Leitelemente (10, 20) diffusorartig und die anderen Leitelemente (10, 20) düsenartig ausgebildet sind und sich in Umfangsrichtung abwechseln.

## Beschreibung

Die Erfindung betrifft eine Düse mit Leitelementen. Weiterhin betrifft die Erfindung eine Verwendung der Düse in einer Gasturbine und eine Verwendung in einem Brenner, einem Ejektor und/oder einer Mischdüse in verfahrenstechnischen Anlagen.

Besonders beim Startvorgang eines Flugzeugs ist der Antriebsstrahl eine bedeutende Schallquelle. Die Minderung des Strahllärms ist daher eine technologische Herausforderung an die Luftfahrtindustrie. Bei herkömmlichen Düsen mit langer Nebenstromdüse (gemischte Düsenkonfiguration) oder mit kurzer Nebenstromdüse (separate/nicht gemischte Düsenkonfiguration) und glatter Strahlaustrittskante am Düsenrand ist es charakteristisch, dass sich bei den aus der Düse austretenden konzentrischen Strahlen sehr stabile, kohärente Wirbelstrukturen in den Scherschichten des Freistrahls bilden, die einen erheblichen Beitrag zu den Schallemissionen leisten.

Die Anwendung schallabsorbierender Maßnahmen scheidet aus, weil sich der Ort der Schallerzeugung weiter stromab vom Triebwerk befindet. Es ist bekannt, dass man die Ursache der Schallemissionen in geeigneter Weise beeinflussen kann, um die Schallemissionen zu verringern. Dazu gehören grundsätzlich aktive und passive Maßnahmen.

Bei passiven Maßnahmen ist die Form der Strahlaustrittskante nicht glatt, sondern in Umfangsrichtung variabel ausgeführt. Dabei werden zum Beispiel in axialer Richtung runde oder eckige, Zahnungen eingesetzt, die in der Fachsprache auch als Serrations oder Chevrons bezeichnet werden. Weiterhin sind auch radial nach innen oder außen gewölbte Zahnungen bekannt, die oft als Corrugations bezeichnet werden. Außerdem sind Düsen bekannt, deren Strahlaustrittskante abgeschrägt ist.

Die Zahnungen sind meistens starr ausgeführt, können aber auch verstellbar sein. Verstellbare Zahnungen sind durch aktive Stellmechanismen einziehbar oder durch Werkstoffe mit Gedächtniseigenschaften verformbar. Verstellbare Zahnungen ermöglichen eine Verringerung der Schallemissionen besonders beim Start eines Flugzeugs. Im Reiseflug können die Zahnungen dann so eingestellt werden, dass die Strömungsverluste gering sind, wodurch Treibstoff eingespart werden kann.

Zum Beispiel beschreibt die GB 2 355 766 A eine gemischte Düsenkonfiguration bei einem Strahltriebwerk mit Strahlaustrittskanten, bei denen trapezförmige Leitbleche in Richtung der Innenseite der einzelnen Düsen geneigt sind. zwischen den Leitblechen befinden sich ebenfalls trapezförmige oder dreieckige Zwischenräume. Die Form und Neigung der Leitbleche führt zu einer Wirbelbildung in der Strömung des Austrittsstrahls. Die Leitbleche und die Zwischenräume verringern die Schallemissionen jedoch nur in geringem Maße.

Weiterhin ist zur Verringerung von Schallemissionen das Injektorprinzip bekannt, bei dem durch Öffnungen in der Düsenwand Luft angesaugt wird, die sich dann mit dem Gas im Antriebsstrahl vermischt.

Zum Beispiel offenbart die US 3,982,696 eine Düse eines Strahltriebwerks, an deren Innenseite im Querschnitt bogenförmige Elemente mit zur Innenseite geneigten Leitblechen angeordnet sind, durch die Luft in den Antriebsstrahl eingeführt wird. Die Luftstrahlen vermischen sich mit dem Gas des Antriebsstrahls und verringern so die Schallemissionen.

Die beschriebenen Formen der Strahlaustrittskante werden sowohl bei einzelnen Düsen als auch bei Düsen mit Nebenstromdüse angewendet.

Aus den erwähnten, rezenten, passiven Maßnahmen wurden unmittelbar aktive Beeinflussungstechniken abgeleitet, indem die Zahnungen am Düsenrand beweglich ausgeführt wurden. Die Zahnung wird zur Vibration angeregt, um Scherinstabilitäten sowie Wirbelbildungen zu beeinflussen und dadurch die Schallemissionen zu verringern. Hierzu sind zusätzliche Anbauteile zum Betrieb notwendig.

Zu den aktiven Maßnahmen der Verringerung von Schallemissionen gehören auch Techniken, bei denen im Bereich der Düsenwand Gas, Dampf oder Flüssigkeiten durch kleine Düsen eingespritzt werden. Diese Lösungen sind als Mikro-Strahlen oder auch Micro Jets bekannt.

Herkömmliche Düsen mit glatter Strahlaustrittskante sind bekannt für sehr hohe Schallemissionen. Die Strömungsverluste sind jedoch niedriger als bei allen oben aufgeführten Modifikationen.

Die passiven Maßnahmen mit Zahnungen (Serrations oder Chevrons), die in die Strömung ragen, sind zwar effizient hinsichtlich der Verringerung der Schallemissionen, erzeugen aber relativ hohe Strömungsverluste, die sich nachteilig auf die Triebwerkseffizienz auswirken.

Bei verstellbaren Mechanismen ist nachteilig, dass bewegliche Teile erforderlich sind, die eine Antriebseinheit und damit zusätzliche Energie sowie eine Steuereinheit erfordern. Weiterhin entsteht zusätzliches Gewicht. Außerdem sind diese Mechanismen wartungsintensiv, aufwendig und teuer.

Bei aktiven Maßnahmen sind die oben genannten Nachteile ebenfalls vorhanden. Sie sind sogar stärker ausgeprägt als bei passiven, verstellbaren Techniken. Die praktische Anwendbarkeit von Materialien mit Gedächtniseigenschaften ist außerdem bisher noch nicht demonstriert worden.

Einen weiteren, sehr wesentlichen Nachteil sowohl der aktiven als auch der passiven Maßnahmen bringen die gegenwärtig vorgeschlagenen Formgebungen der Strahlaustrittskanten mit sich. Es ist physikalisch bedingt, dass die Reduktion des tieffrequenten Strahllärms gleichzeitig eine Erhöhung des hochfrequenten Strahllärms bewirkt. Die Gesamtlärmreduktion ist damit weniger effizient.

Es ist ein besonderes Problem bei der Konstruktion von Düsen für Strahltriebwerke, die aerodynamische Schallerzeugung im Antriebsstrahl eines Flugzeugs zu verringern und gleichzeitig keine bzw. nur eine geringe Verschlechterung der aerodynamischen Eigenschaften, wie dem Druckverlust, zu bewirken.

Der Erfindung liegt daher die Aufgabe zu Grunde eine Düse zu schaffen, die die Schallemissionen verringert und gleichzeitig die Strömungsverluste gering hält.

Diese Aufgabe wird erfindungsgemäß mit Hilfe einer Düse mit Leitelementen mit den Merkmalen des Anspruchs 1 gelöst. Weiterhin wird die Aufgabe durch eine Verwendung in einer Gasturbine nach Anspruch 18 und eine Verwendung in einem Brenner, einem Ejektor und/oder einer Mischdüse in verfahrenstechnischen Anlagen gemäß Anspruch 19 gelöst. Vorteilhafte Weiterbildungen der Erfindung sind in den Unteransprüchen enthalten.

Erfindungsgemäß besteht die Lösung der Aufgabe in einer Düse mit am Düsenrand in Umfangsrichtung angeordneten Leitelementen. Am Düsenrand sind weitere Leitelemente in Umfangsrichtung angeordnet, wobei die einen Leitelemente diffusorartig und die anderen Leitelemente düsenartig ausgebildet sind und sich in Umfangsrichtung abwechseln.

Durch die düsen- und diffusorartigen Leitelemente entstehen Bereiche, in denen die Strömung lokal beschleunigt bzw. verzögert wird. Bei dieser Gestaltung der ersten und zweiten Leitelemente wird das ausströmende Medium am Düsenrand, wo das ausströmende Medium auf das umgebende Medium trifft, mit einfachen und robusten Mitteln verwirbelt. Das Einbringen zusätzlicher Wirbelstärke durch lokales Beschleunigen bzw. Verzögern der Strömung fördert den Mischungsprozess bei minimierten, durch die geometrische Variation der ersten und zweiten Leitschaufeln auftretenden Druckverlusten. Die ersten und zweiten Leitelemente verbessern somit das Verhältnis von Lärmreduktion zu Strömungsverlusten.

Die ersten und zweiten Leitelemente sind wartungsarm und kostengünstig und sind gewichtsneutral oder leicht. Es sind weiterhin keine beweglichen Teile erforderlich, und damit auch kein zusätzlicher Mechanismus mit Energiezufuhr und Steuerung.

Die ersten Leitelemente umfassen jeweils zwei Wandelemente, die in einem Winkel zur Strömungsrichtung verlaufen, mit den jeweils benachbarten zweiten Leitelementen verbunden sind und die Diffusor- und Düsenströmungen am Düsenrand voneinander trennen. Die Wandelemente ermöglichen eine präzise lokale Beschleunigung bzw. Verzögerung der Strömung am Düsenrand und damit eine gezielte Verwirbelung mit geringen Strömungsverlusten.

Die Leitelemente bilden in Strömungsrichtung abwechselnd konvergierende und divergierende Trapeze. Durch die Trapezform der Leitelemente werden düsen- und diffusorartigen Abschnitte am Düsenrand gebildet und der Austrittsstrahl am Düsenrand optimal beschleunigt bzw. verzögert.

Die ersten Leitelemente und/oder die zweiten Leitelemente können eben sein. Ebene Leitelemente sind einfach herzustellen.

Alternativ dazu können die ersten Leitelemente und/oder die zweiten Leitelemente nach außen gewölbt sein. Auch diese Geometrie ist einfach herstellbar, wobei Leitelemente mit einer nach außen gerichteten Wölbung eine bessere Strömungsführung ermöglichen.

Vorzugsweise sind die Kantenwinkel β der zweiten Leitelemente gleich den Kantenwinkeln β der benachbarten ersten Leitelemente gegenüber den jeweils zugehörigen Mittellinien, und die Wandelemente sind im Wesentlichen senkrecht zu den zweiten Leitelementen. Durch die übereinstimmenden Kantenwinkel der ersten und zweiten Leitelemente und die senkrechten Wände kann die Herstellung der Düse vereinfacht werden.

Insbesondere können die Leitelemente symmetrisch sein. Durch die Symmetrie wird eine gleichmäßige Verwirbelung bei geringen Strömungsverlusten erzielt. Die Herstellung wird außerdem weiter vereinfacht.

Vorzugsweise betragen die Kantenwinkel β der Leitelemente gegenüber den zugehörigen Mittellinien zwischen 0° und 15°. Dieser Winkelbereich bewirkt eine optimale Durchmischung der Teilströme an den ersten Leitelementen und den zweiten Leitelementen, ohne dass die Strömungsverluste zu hoch werden.

Insbesondere sind die zweiten Leitelemente radial einwärts oder radial auswärts geneigt. Durch die Neigung der zweiten Leitelemente wird die Verwirbelung des ausströmenden Mediums mit dem umgebenden Medium weiter verstärkt.

Vorzugsweise beträgt die Neigung der Leitelemente gegenüber einer Mittellinie, die tangential an die Düsenmantelfläche anschließt, zwischen 0° und 15°. Diese Neigungen ermöglichen eine gute Verwirbelung bei gleichzeitig geringen Strömungsverlusten.

Vorzugsweise bilden die ersten und zweiten Leitelemente eine ebene Strahlaustrittskante. Dadurch wird die Strömung in den ersten und zweiten Leitelementen in Strömungsrichtung auf gleicher Höhe lokal verwirbelt, wodurch die Strömungsverluste gering gehalten werden.

Vorzugsweise sind die Kanten zwischen der Düsenmantelfläche und den ersten Leitelementen und/oder den zweiten Leitelementen abgerundet. Die Abrundung verbessert die Strömungsführung.

Weiterhin können mindestens ein Teil der winkligen Kanten der ersten Leitelemente und/oder der zweiten Leitelemente in Umfangsrichtung der Düse abgerundet sein. Diese Abrundungen verbessern die Strömungsführung zusätzlich.

Vorzugsweise sind die ersten Leitelemente und/oder die zweiten Leitelemente aus Segmenten der Düsenmantelfläche gebildet. Die Segmente können beispielsweise durch Schneiden und Biegen aus der Düsenmantelfläche geformt werden, wodurch eine einfache und kostengünstige Herstellung möglich ist.

Alternativ können die ersten Leitelemente und/oder die zweiten Leitelemente an der Düsenmantelfläche befestigt sein. Eine separate Herstellung und anschließendes Befestigen der ersten und zweiten Leitelemente an der Düsenmantelfläche ermöglicht ein Nachrüsten von herkömmlichen Düsen.

In einer besonderen Ausgestaltung der Erfindung ist der Düsenrand mit der Strahlaustrittskante abgeschrägt. Eine abgeschrägte Düse dient der Verringerung von Schallemissionen, die durch die ersten und zweiten Leitelemente noch weiter verringert werden können.

In einer weiteren vorteilhaften Ausgestaltung der Erfindung kann die Düse eine Kernstromdüse und eine Nebenstromdüse umfassen, wobei mindestens die Kernstromdüse oder die Nebenstromdüse die ersten und zweiten Leitelemente aufweist. Eine Düse mit einer Kernstromdüse und einer Nebenstromdüse erzeugt vermehrte Schallemissionen, so dass hier die Anordnung der ersten und zweiten Leitbleche zur Verminderung dieser Schallemissionen besonders vorteilhaft ist.

Besonders vorteilhaft ist die Verwendung der Düse in einer Gasturbine, da hier die Verminderung von Schallemissionen besonders wichtig zum Schutz der Umwelt ist. Insbesondere bei einem Strahltriebwerk sollen auch die Passagiere und die Besatzung vor Lärm geschützt werden. Mit Hilfe der erfindungsgemäßen Düse wird der tieffrequente Lärm effizient reduziert. Weiterhin bringt die Düse keine oder nur eine geringe Erhöhung des hochfrequenten Lärms mit sich und weist keine oder nur geringe Strömungsverluste auf. Die Erfindung kann sowohl auf kurze Düsen("Short Cowl", "Separarte Jets", "1/2 Cowl", "3/4 Cowl") als auch auf lange Düsen ("Long Cowl", "Mixed Jets") angewendet werden.

Außerdem kann die Düse in einem Brenner, einem Ejektor oder einer Mischdüse in verfahrenstechnischen Anlagen verwendet werden. Auch in verfahrenstechnischen Anlagen ist eine Verringerung von Schallemissionen zum Schutz der Umwelt und des Bedienpersonals vorteilhaft.

Im Folgenden werden zwei verschiedene Ausführungsbeispiele der erfindungsgemäßen Düse anhand von Figuren näher erläutert. Es zeigen:
- Fig. 1: eine perspektivische Ansicht des ersten Ausführungsbeispiels der Düse,
- Fig. 2: eine perspektivische Ansicht des zweiten Ausführungsbeispiels der Düse.
- Fig. 3: eine perspektivische Detailansicht der ersten und zweiten Leitelemente der Düsen in Fig. 1 und 2 und
- Fig. 4: eine perspektivische Detailansicht von alternativen ersten und zweiten Leitelementen für die Düsen in Fig. 1 und 2.

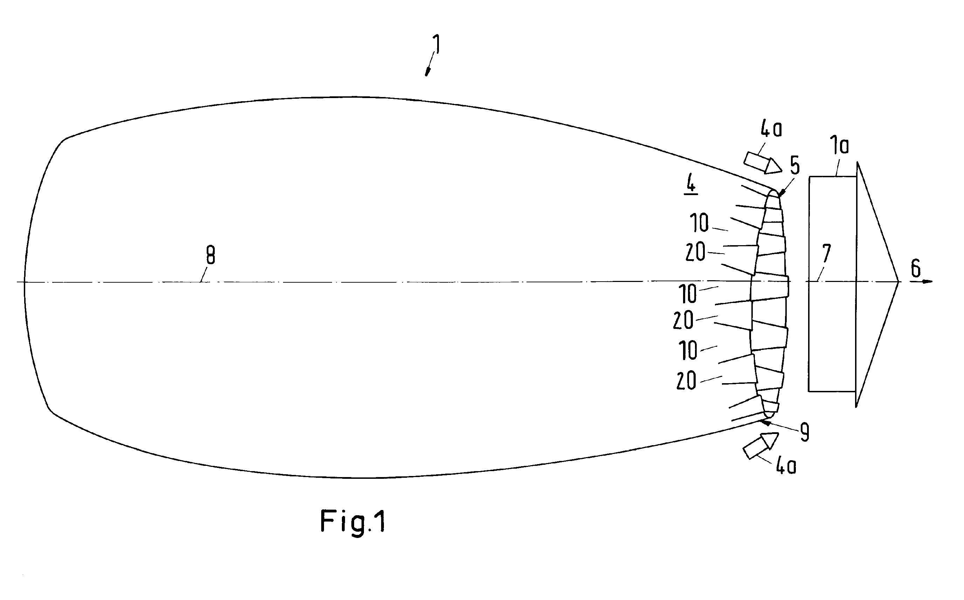

Fig. 1 zeigt eine Düse 1 mit einer Düsenmantelfläche 4 sowie ersten Leitelementen 10 und zweiten Leitelementen 20 an einem Düsenrand 9 mit einer Strahlaustrittskante 5. Die ersten Leitelemente 10 konvergieren in Strömungsrichtung 6 und sind radial nach innen geneigt, während die zweiten Leitelemente 20 in Strömungsrichtung 6 divergieren und radial nach außen geneigt sind. Die Strahlachse 7 bildet in Strömungsrichtung 6 eine Verlängerung der Mittellinie 8 der Düse 1.

Im Betrieb tritt ein Antriebsstrahl 1a an der Strahlaustrittskante 5 aus der Düse 1 aus. Eine Außenströmung 4a verläuft entlang der Düsenmantelfläche 4.

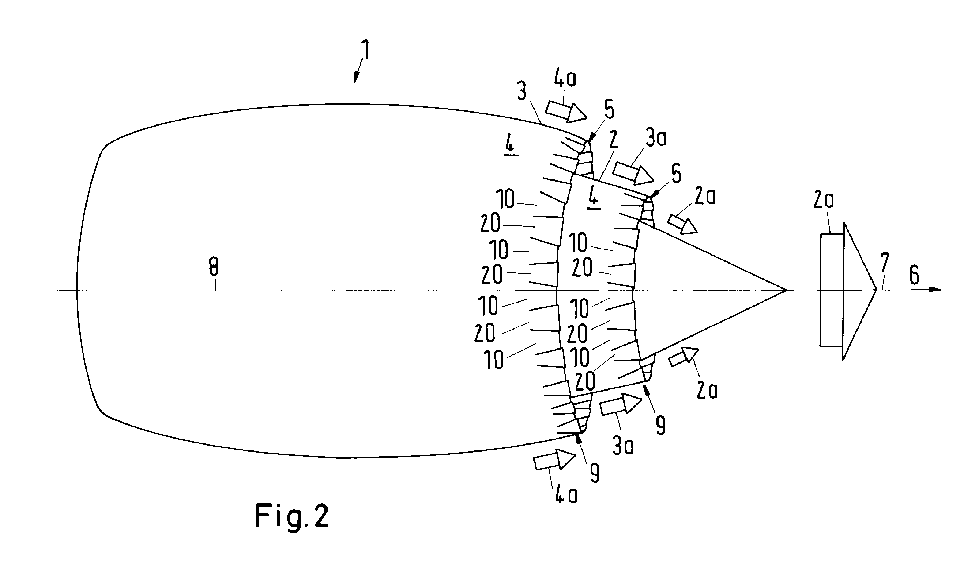

Fig. 2 zeigt eine Düse 1, die eine Kernstromdüse 2 und eine Nebenstromdüse 3 umfasst. Die Kernstromdüse 2 und die Nebenstromdüse 3 weisen jeweils eine Düsenmantelfläche 4 mit einer Strahlaustrittskante 5 sowie erste Leitelemente 10 und zweite Leitelemente 20 an Düsenrändern 9 mit zugehörigen Strahlaustrittskanten 5 auf. Wie in Fig. 1 konvergieren die ersten Leitelemente 10 in Strömungsrichtung 6 und sind radial nach innen geneigt, während die zweiten Leitelemente 20 in Strömungsrichtung 6 divergieren und radial nach außen geneigt sind. Die Strahlachse 7 bildet in Strömungsrichtung 6 eine Verlängerung der Mittellinie 8 der Düse 1.

Im Betrieb tritt ein heißer Kernstrom 2a aus der Kernstromdüse 2 aus. Ein kalter Nebenstrom 3a tritt aus der Nebenstromdüse 3 aus. Die Außenströmung 4a verläuft entlang der Düsenmantelfläche 4 der Nebenstromdüse 3.

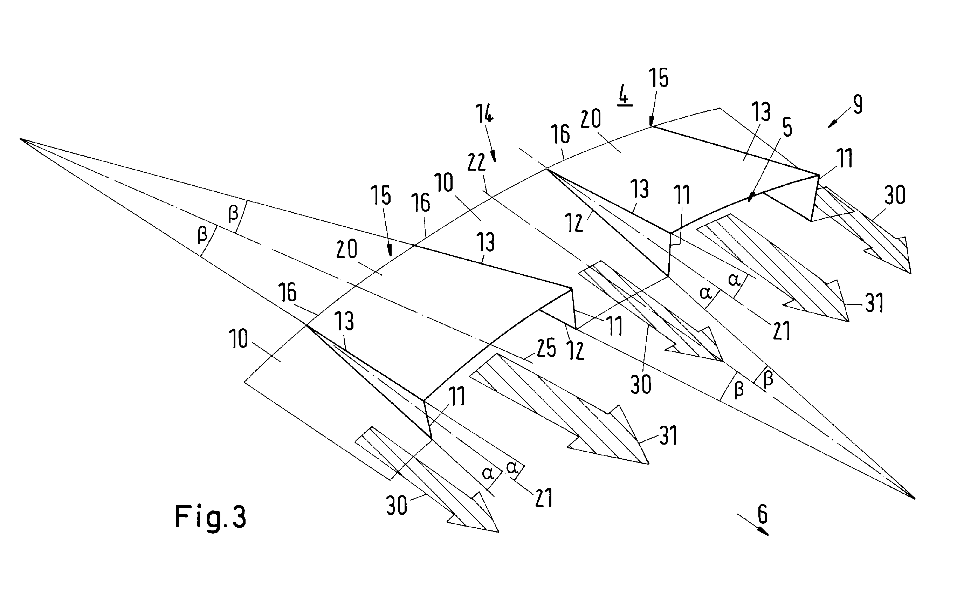

In Fig. 3 ist eine Detailansicht des Düsenrandes 9 mit den ersten Leitelementen 10 und den zweiten Leitelementen 20 der Fig. 1 und 2 dargestellt.

Der Düsenrand 9 wird aus ersten Leitelementen 10 und zweiten Leitelementen 20 gebildet. Die ersten Leitelemente 10 umfassen je zwei Kanten 12, zwei an die Kanten 12 anschließende Wandelemente 11 und eine in Umfangsrichtung verlaufende Kante 16, die an die Düsenmantelfläche 4 angrenzt. Die ersten Leitelemente 10 sind gegenüber zugehörigen Mittellinien 21, die tangential an die Düsenmantelfläche 4 anschließen, jeweils um den Winkel α radial einwärts geneigt. Der Winkel α beträgt zwischen 0° und 15°. Die beiden Kanten 12 verlaufen in Strömungsrichtung gegenüber den Mittellinien 22 der ersten Leitelemente 10 jeweils symmetrisch in Winkeln β, so dass die Kanten 12 in Strömungsrichtung gleichmäßig konvergieren. Der Winkel β beträgt zwischen 0° und 15°. Die ersten Leitelemente 10 verjüngen sich dadurch trapezförmig in Strömungsrichtung. Die ersten Leitelemente 10 einschließlich der Wandelemente 11 bilden somit Düsen 14, die im Querschnitt in Umfangsrichtung jeweils ein radial nach außen offenes Rechteck bilden.

Die Wandelemente 11 der ersten Leitelemente 10 sind dreieckförmig, grenzen jeweils an die Kanten 12 an und verlaufen in Strömungsrichtung symmetrisch in den Winkeln β gegenüber den Mittellinien 22 der ersten Leitelemente. Außerdem grenzen die Wandelemente 11 der ersten Leitelemente 10 jeweils senkrecht an die Kanten 13 der beiden benachbarten zweiten Leitelemente 20 an.

Die zweiten Leitelemente 20 umfassen je zwei Kanten 13, und eine in Umfangsrichtung verlaufende Kante 16, die an die Düsenmantelfläche 4 angrenzt. Die zweiten Leitelemente 20 sind gegenüber den Mittellinien 21, ebenfalls jeweils um den gleichen Winkel α geneigt wie die ersten Leitelemente 10, jedoch nicht radial einwärts, wie die ersten Leitelemente 10, sondern radial auswärts. Die zweiten Leitelemente 20 können jedoch auch ohne die Neigung ausgeführt sein und stattdessen einen Teil der Düsenmantelfläche 4 bilden. Außerdem verlaufen die Kanten 13 der zweiten Leitelemente 20 in dem gleichen Winkel β gegenüber den zugehörigen Mittellinien 25 wie die Kanten 12 der benachbarten ersten Leitelemente 10 gegenüber den Mittellinien 22. Zusammen mit den Wandelementen 11 der ersten Leitelemente 10 bilden die zweiten Leitelemente 20 je einen Diffusor 15, der im Querschnitt in Umfangsrichtung ein radial nach innen offenes Rechteck bildet.

Der Düsenrand 9 ist also nicht glatt wie bei herkömmlichen Düsen, sondern in Form speziell ausgeformter offener Düsen 14 und Diffusoren 15 ausgeführt. Die ersten Leitelemente 10 mit den Wandelementen 11 und die zweiten Leitelemente 20 bilden auch die Strahlaustrittskante 5, die im Querschnitt die Form eines gezahnten Kreises aufweist.

Im Betrieb der Düse 1 gemäß Fig. 1 wird die Außenströmung 4a in den Düsen 14 lokal beschleunigt und dabei nach innen zur Strahlachse 7 hin in Richtung des Antriebsstrahls 1a geleitet, wodurch die Düsenströmung 30 entsteht. Im Gegensatz dazu wird der Antriebsstrahl 1a in den Diffusoren 15 lokal verzögert und gleichzeitig nach außen in Richtung der Außenströmung 4a geleitet, wodurch die Diffusorströmung 31 entsteht.

Im Betrieb der Düse 1 gemäß Fig. 2 wird die Außenströmung 4a in den Düsen 14 der Nebenstromdüse 3 lokal beschleunigt und dabei nach innen zur Strahlachse 7 hin in Richtung des Nebenstroms 3a geleitet, wodurch die Düsenströmung 30 entsteht. Im Gegensatz dazu wird der Nebenstrom 3a in den Diffusoren 15 lokal verzögert und gleichzeitig nach außen in Richtung der Außenströmung 4a geleitet. Außerdem wird der Nebenstrom 3a in den Düsen 14 der Kernstromdüse 2 lokal beschleunigt und in Richtung des Kernstroms 2a gelenkt. Der Kernstrahl 2a wird in den Diffusoren 15 lokal verzögert und nach außen in Richtung des Nebenstroms 3a gelenkt, wodurch die Diffusorströmung 31 entsteht.

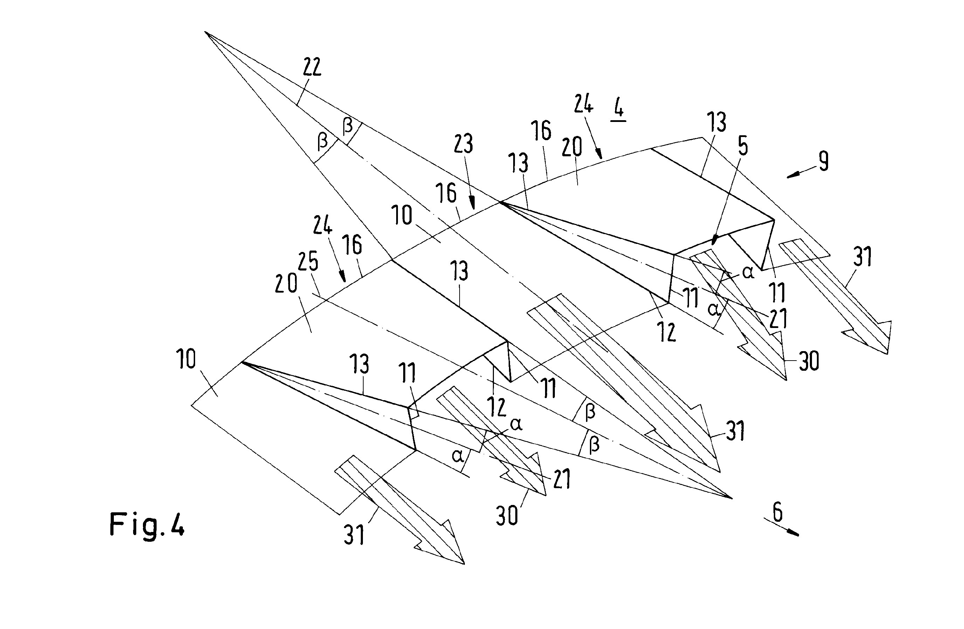

In Fig. 4 ist eine Detailansicht von alternativen ersten und zweiten Leitelementen 10, 20 dargestellt.

Auch hier wird der Düsenrand 9 aus ersten Leitelementen 10 und zweiten Leitelementen 20 gebildet. Die ersten Leitelemente 10 umfassen je zwei Kanten 12, zwei an die Kanten 12 anschließende Wandelemente 11 und eine in Umfangsrichtung verlaufende Kante 16, die an die Düsenmantelfläche 4 angrenzt. Die ersten Leitelemente 10 sind gegenüber zugehörigen Mittellinien 21, die tangential an die Düsenmantelfläche 4 anschließen, jeweils um den Winkel α radial einwärts geneigt. Der Winkel α beträgt zwischen 0° und 15°. Die beiden Kanten 12 verlaufen in Strömungsrichtung gegenüber den Mittellinien 22 der ersten Leitelemente 10 jeweils symmetrisch in Winkeln β, so dass die Kanten 12 in Strömungsrichtung gleichmäßig divergieren statt wie in den Fig. 1 bis 3 zu konvergieren. Der Winkel β beträgt zwischen 0° und 15°. Die ersten Leitelemente 10 erweitern sich dadurch trapezförmig in Strömungsrichtung. Die ersten Leitelemente 10 einschließlich der Wandelemente 11 bilden also im Gegensatz zu der Ausführung in den Fig. 1 bis 3 nicht Düsen 14, sondern Diffusoren 23, die im Querschnitt in Umfangsrichtung je ein radial nach außen offenes Rechteck bilden.

Die Wandelemente 11 der ersten Leitelemente 10 sind dreieckförmig, grenzen, wie in Fig. 3, jeweils an die Kanten 12 an und verlaufen in Strömungsrichtung symmetrisch in den Winkeln β gegenüber den Mittellinien 22 der ersten Leitelemente. Außerdem grenzen die Wandelemente 11 der ersten Leitelemente 10 jeweils senkrecht an die Kanten 13 der beiden benachbarten zweiten Leitelemente 20 an.

Die zweiten Leitelemente 20 umfassen je zwei Kanten 13 und eine in Umfangsrichtung verlaufende Kante 16, die an die Düsenmantelfläche 4 angrenzt. Die zweiten Leitelemente 20 sind, wie in Fig. 3, gegenüber den Mittellinien 21, jeweils um den gleichen Winkel α geneigt wie die ersten Leitelemente 10, jedoch nicht radial einwärts, wie die ersten Leitelemente 10, sondern radial auswärts. Jedoch können die zweiten Leitelemente 20 auch hier ohne die Neigung ausgeführt sein und stattdessen einen Teil der Düsenmantelfläche 4 bilden. Außerdem verlaufen die Kanten 13 der zweiten Leitelemente 20 in dem gleichen Winkel β gegenüber den zugehörigen Mittellinien 25 wie die Kanten 12 der benachbarten ersten Leitelemente 10 gegenüber den Mittellinien 22. Zusammen mit den Wandelementen 11 der ersten Leitelemente 10 bilden die zweiten Leitelemente 20 nicht wie in den Fig. 1 bis 3 Diffusoren 15, sondern Düsen 24, die im Querschnitt in Umfangsrichtung jeweils ein radial nach innen offenes Rechteck bilden.

Der Düsenrand 9 ist also nicht glatt wie bei herkömmlichen Düsen, sondern in Form speziell ausgeformter offener Diffusoren 23 und Düsen 24 ausgeführt. Die ersten Leitelemente 10 mit den Wandelementen 11 und die zweiten Leitelemente 20 bilden, wie in Fig. 3, auch die Strahlaustrittskante 5, die wie oben im Querschnitt die Form eines gezahnten Kreises aufweist.

Die ersten Leitelemente 10 und die zweiten Leitelemente 20 können aus der Düsenmantelfläche 4 heraus geformt oder getrennt als Nachrüstsatz zur Befestigung an der Düsenmantelfläche 4 von herkömmlichen Düsen 1 ausgebildet sein.

Im Betrieb der Düse 1 gemäß Fig. 1 wird die Außenströmung 4a in den Diffusoren 23 lokal verzögert und dabei nach innen zur Strahlachse 7 hin in Richtung des Antriebsstrahls 1a geleitet, wodurch die Diffusorströmung 31 entsteht. Im Gegensatz dazu wird der Antriebsstrahl 1a in den Düsen 24 lokal beschleunigt und gleichzeitig nach außen in Richtung der Außenströmung 4a geleitet, wodurch die Düsenströmung 30 entsteht.

Im Betrieb der Düse 1 gemäß Fig. 2 wird die Außenströmung 4a in den Diffusoren 23 der Nebenstromdüse 3 lokal verzögert und dabei nach innen zur Strahlachse 7 hin in Richtung des Nebenstroms 3a geleitet, wodurch die Diffusorströmung 31 entsteht. Im Gegensatz dazu wird der Nebenstrom 3a in den Düsen 24 lokal beschleunigt und gleichzeitig nach außen in Richtung der Außenströmung 4a geleitet. Außerdem wird der Nebenstrom 3a in den Diffusoren 23 der Kernstromdüse 2 lokal verzögert und in Richtung des Kernstroms 2a gelenkt. Der Kernstrahl 2a wird in den Düsen 24 lokal beschleunigt und nach außen in Richtung des Nebenstroms 3a gelenkt, wodurch die Düsenströmung 30 entsteht.

Sowohl bei einer Anordnung der Leitelemente 10, 20 gemäß Fig. 3 als auch bei einer Anordnung der Leitelemente 10, 20 gemäß Fig. 4 wird die Strömung im Bereich der Strahlaustrittskante beeinflusst, so dass eine Reduzierung des Strahllärms eintritt, die auf dem im Folgenden beschriebenen Wirkmechanismus beruht.

Hauptursache für den vom Antriebsstrahl 1a bzw. vom Kernstrom 2a und vom Nebenstrom 3a erzeugten Lärm sind die stabilen kohärenten Strukturen, die auf Grund der Geschwindigkeitsdifferenz zwischen den jeweiligen Innenströmungen 1a, 2a, 3a und den Außenströmungen 3a, 4a erzeugt werden. Die diesen Strömungen 1a, 2a, 3a, 4a zu Grunde liegende Wirbelstärke ist im Allgemeinen senkrecht zur Strömungsrichtung 6 und zur Richtung der maximalen Geschwindigkeitsdifferenz gerichtet und verläuft somit im Allgemeinen in Umfangsrichtung der Düse 1 bzw. der Kernstromdüse 2 und der Nebenstromdüse 3. Die so entstehenden Ringwirbel zeichnen sich dadurch aus, dass sie in sich stabil sind und große Druckschwankungen, also Lärm erzeugen.

Durch die lokale Beschleunigung und Verzögerung der vom Düsenrand 9 abgehenden Strömung (Düsenströmung 30, Diffusorströmung 31) im Bereich der Strahlaustrittskante 5 mittels der Düsen 14, 24 und der Diffusoren 15, 23 wird eine Variation der axialen Geschwindigkeit in Umfangsrichtung erreicht. Infolge dessen werden Axial- und Radialwirbel stromab der Düse 1 bzw. der Kernstromdüse 2 und der Nebenstromdüse 3 generiert, die mit den stabilen Ringwirbeln interagieren. Diese verformen sich schließlich und zerstören sich durch Selbstinduktion. Dies sorgt für einen erhöhten Impulsaustausch, d.h. für eine bessere, homogenere Durchmischung der Innenströmung 1a, 2a, 3a und der Außenströmung 3a, 4a. Die großen, tieffrequenten Lärm erzeugenden Wirbelstrukturen werden in kleine Wirbelstrukturen zerschlagen, deren abgestrahlter hochfrequenter Lärm schneller dissipiert und atmosphärisch gedämpft wird. Die Schwächung der großen in Umfangsrichtung kohärenten Wirbelstrukturen führt also letztendlich zu einer verminderten Lärmerzeugung im Antriebsstrahl 1a bzw. im Kernstrahl 2a und im Nebenstromstrahl 3a.

Die aus den ersten und zweiten Leitelementen 10, 20 gebildeten Düsen 14, 24 und Diffusoren 15, 23 erzeugen gekreuzte Scherschichten, die zu einer Inkohärenz der Wirbelstrukturen in Umfangsrichtung führen. Kohärente Wirbelstrukturen sind stabil und bilden den Hauptanteil bei der Strahllärmerzeugung. Durch das Aufbrechen der Kohärenz wird der Schallerzeugungsmechanismus geschwächt und es wird weniger Lärm in den Strahlen 1a, 2a und 3a erzeugt und abgestrahlt. Die spezielle geometrische Gestaltung des Düsenrandes 9 bewirkt eine besonders hohe Effizienz der Lärmminderung bei gleichzeitig geringen aerodynamischen Verlusten.

### Bezugszeichenliste

- 1: Düse
- 1a: Antriebsstrahl
- 2: Kernstromdüse
- 2a: Kernsstrom
- 3: Nebenstromdüse
- 3a: Nebenstrom
- 4: Düsenmantelfläche
- 4a: Außenströmung
- 5: Strahlaustrittskante
- 6: Strömungsrichtung
- 7: Strahlachse
- 8: Mittellinie
- 9: Düsenrand

- 10: erste Leitelemente
- 11: Wandelemente
- 12: Kante
- 13: Kante
- 14: Düse
- 15: Diffusor
- 16: Kante

- 20: zweite Leitelemente
- 21: Mittellinie
- 22: Mittellinie
- 23: Diffusor
- 24: Düse
- 25: Mittellinie

- α: Neigungswinkel
- β: Kantenwinkel

- 30: Düsenströmung
- 31: Diffusorströmung

## Patentansprüche

1. Düse mit am Düsenrand (9) in Umfangsrichtung angeordneten Leitelementen (10), **dadurch gekennzeichnet, dass** am Düsenrand (9) weitere Leitelemente (20) in Umfangsrichtung angeordnet sind, wobei die einen Leitelemente (10, 20) diffusorartig und die anderen Leitelemente (10, 20) düsenartig ausgebildet sind und sich in Umfangsrichtung abwechseln.

2. Düse nach Anspruch 1, **dadurch gekennzeichnet, dass** die ersten Leitelemente (10) jeweils zwei Wandelemente (11) umfassen, die in einem Winkel zur Strömungsrichtung (6) verlaufen, mit den jeweils benachbarten zweiten Leitelementen (20) verbunden sind und die Diffusor- und Düsenströmungen (30, 31) am Düsenrand (9) voneinander trennen.

3. Düse nach einem der Ansprüche 1 oder 2, **dadurch gekennzeichnet, dass** die Leitelemente (10, 20) in Strömungsrichtung abwechselnd konvergierende und divergierende Trapeze bilden.

4. Düse nach Anspruch 3, **dadurch gekennzeichnet, dass** die ersten Leitelemente (10) und/oder die zweiten Leitelemente (20) eben sind.

5. Düse nach Anspruch 3, **dadurch gekennzeichnet, dass** die ersten Leitelemente (10) und/oder die zweiten Leitelemente (20) nach außen gewölbt sind.

6. Düse nach einem der vorhergehenden Ansprüche, **dadurch gekennzeichnet, dass** die Kantenwinkel β der zweiten Leitelemente (20) gleich den Kantenwinkeln β der benachbarten ersten Leitelemente (10) gegenüber den jeweils zugehörigen Mittellinien (22, 25) und die Wandelemente (11) im Wesentlichen senkrecht zu den zweiten Leitelementen (20) sind.

7. Düse nach Anspruch 6, **dadurch gekennzeichnet, dass** die Leitelemente (10, 20) symmetrisch sind.

8. Düse nach Anspruch 7, **dadurch gekennzeichnet, dass** die Kantenwinkel β der Leitelemente (10, 20) gegenüber den zugehörigen Mittellinien (22, 25) zwischen 0° und 15° betragen.

9. Düse nach einem der Ansprüche 1 bis 8, **dadurch gekennzeichnet, dass** die ersten Leitelemente (10) radial einwärts oder radial auswärts geneigt sind und die zweiten Leitelemente (20) radial einwärts oder radial auswärts geneigt sind.

10. Düse nach Anspruch 9, **dadurch gekennzeichnet, dass** die Neigung der Leitelemente (10, 20) gegenüber einer Mittellinie (21), die tangential an die Düsenmantelfläche(4) anschließt, zwischen 0° und 15° beträgt.

11. Düse nach einem der Ansprüche 1 bis 10, **dadurch gekennzeichnet, dass** die ersten und zweiten Leitelemente (10, 20) eine ebene Strahlaustrittskante (5) bilden.

12. Düse nach einem der Ansprüche 1 bis 11, **dadurch gekennzeichnet, dass** die Kanten (16) zwischen der Düsenmantelfläche (4) und den ersten Leitelementen (10) und/oder den zweiten Leitelementen (20) abgerundet sind.

13. Düse nach einem der Ansprüche 1 bis 12, **dadurch gekennzeichnet, dass** mindestens ein Teil der winkligen Kanten (12, 13) der ersten Leitelemente (10) und/oder der zweiten Leitelemente (20) in Umfangsrichtung der Düse (1) abgerundet sind.

14. Düse nach einem der Ansprüche 1 bis 13, **dadurch gekennzeichnet, dass** die ersten Leitelemente (10) und/oder die zweiten Leitelemente (20) aus Segmenten der Düsenmantelfläche(4) gebildet sind.

15. Düse nach einem der Ansprüche 1 bis 13, **dadurch gekennzeichnet, dass** die ersten Leitelemente (10) und/oder die zweiten Leitelemente (20) an der Düsenmantelfläche(4) befestigt sind.

16. Düse nach einem der Ansprüche 1 bis 15, **dadurch gekennzeichnet, dass** der Düsenrand (9) mit der Strahlaustrittskante (5) abgeschrägt ist.

17. Düse nach einem der Ansprüche 1 bis 16, **dadurch gekennzeichnet, dass** die Düse (1) eine Kernstromdüse (2) und eine Nebenstromdüse (3) umfasst, wobei mindestens die Kernstromdüse (2) oder die Nebenstromdüse (3) die ersten und zweiten Leitelemente (10, 20) aufweist.

18. Verwendung der Düse nach einem der Ansprüche 1 bis 17 in einer Gasturbine.

19. Verwendung der Düse nach einem der Ansprüche 1 bis 17 in einem Brenner, einem Ejektor und/oder einer Mischdüse in verfahrenstechnischen Anlagen.
